# FASCICULE DE BREVET EUROPEEN

(11) **EP 3 386 845 B1**
(45) Date de publication et mention de la délivrance du brevet: **11.09.2019**
(21) Numéro de dépôt: 16825464.7
(22) Date de dépôt: 09.12.2016
(51) Int. Cl.: B62D 25/02, B62D 25/08, B62D 29/00

(54) **ELÉMENT DE CARROSSERIE POUR VÉHICULE AUTOMOBILE ET PROCÉDÉ DE FABRICATION CORRESPONDANT**
KRAFTFAHRZEUGKAROSSERIEELEMENT UND ZUGEHÖRIGES VERFAHREN ZUR HERSTELLUNG
MOTOR VEHICLE BODY ELEMENT AND CORRESPONDING METHOD OF MANUFACTURE

(30) Priorité: 09.12.2015 FR 1562050
(43) Date de publication de la demande: 17.10.2018
(73) Titulaire: Renault s.a.s, 92100 Boulogne-Billancourt (FR)
(72) Inventeur: GROS, Christian, 78400 Chatou (FR)
(86) Numéro de dépôt international: PCT/FR2016/053298
(87) Numéro de publication internationale: WO 2017/098182

(56) Documents cités:
- DE-A1-102012 024 514
- JP-A- 2001 063 630
- US-A1- 2008 238 151
- US-A1- 2012 319 433

## Description

L'invention concerne le domaine des éléments de carrosserie de véhicules automobiles, et plus particulièrement les éléments de carrosserie arrière situés autour de la tôle de passage d'une roue arrière.

Dans le domaine de l'automobile, la partie arrière d'un véhicule comprend de nombreux éléments assemblés entre eux ayant des rôles et des géométries variés.

En raison de cette diversité, les différents éléments sont en général réalisés séparément, par exemple par procédé d'emboutissage ou par fonderie, puis assemblés les uns avec les autres.

Pour assembler les pièces, on pourra mettre en oeuvre un grand nombre de procédés d'assemblage de deux pièces par accostage, au cours desquels on met en regard deux surfaces d'accostage appartenant respectivement aux deux pièces puis on effectue des points de soudure entre les surfaces d'accostage.

Le JP 2001 063630 A décrit un élément de carrosserie pour véhicule automobile, comprenant une première face et une deuxième face opposée à la première face, l'élément comportant une partie de tôle de passage de roue arrière, une zone de fixation pour un amortisseur de véhicule, ainsi qu'une partie avant inférieure d'une fonderie de custode, l'élément comprenant une unique pièce de fonderie comprenant une zone d'alimentation de matière en fusion.

On connaît des assemblages d'une partie arrière de véhicule pouvant comporter plus de 10 pièces.

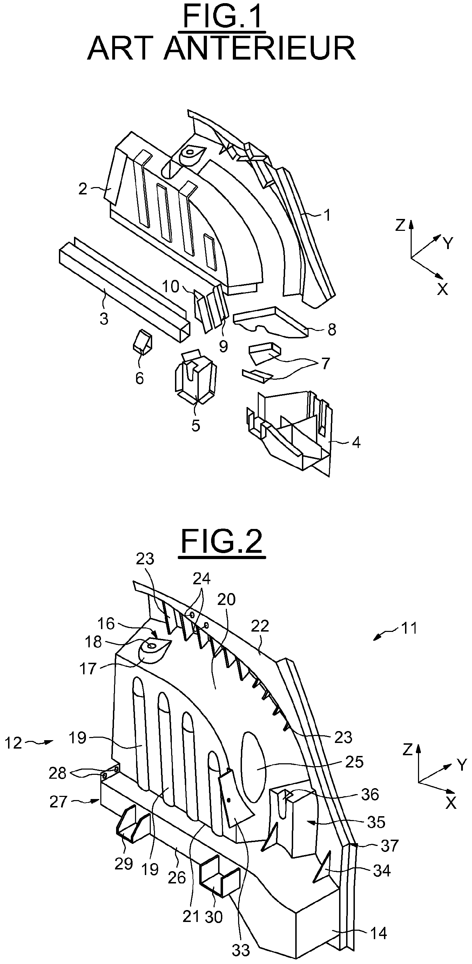

Par exemple, la figure 1 illustre une vue éclatée d'une partie arrière gauche d'un véhicule automobile comprenant une partie basse de custode 1, une tôle de passage de roue arrière 2, une partie de longeron arrière 3, une palier de train arrière 4, un support de banquette arrière 5, un support pour réservoir de carburant 6, des tôles de renfort et de fixation de train arrière 7, une tôle de fermeture de plancher arrière 8, une tôle de fixation de dossier de siège arrière 9 et une tôle de renfort de fixation de dossier de siège arrière 10.

Ces nombreuses pièces sont assemblées les unes aux autres par environ autant de procédés d'accostage qu'il y a de pièces.

Sur une telle structure, un pourcentage important du volume de la structure est utilisé pour créer des surfaces d'accostage. Ce pourcentage entraîne un supplément de masse de la structure, pouvant être de l'ordre de 30%. Cela engendre de moindres performances du véhicule, une surconsommation du véhicule et une augmentation des rejets de polluants par le véhicule. Par ailleurs, la réalisation de la structure par assemblage d'un grand nombre de pièces a pour conséquence la multiplication des étapes de production et d'assemblage des pièces. Il peut en outre être nécessaire de réaliser l'étanchéité de l'assemblage par pose de mastic d'étanchéité sur les surfaces d'accostage. La multiplication du nombre d'étapes augmente finalement le coût de production de la custode, et donc du véhicule.

Il est donc proposé ici de remédier aux problèmes liés à l'assemblage d'une structure arrière par assemblage de plusieurs pièces.

Selon un aspect, il est proposé un élément de carrosserie pour véhicule automobile, comprenant une première face et une deuxième face opposée à la première face, l'élément comportant une partie de tôle de passage de roue arrière, une zone de fixation pour un palier de train arrière du véhicule, une partie de longeron arrière, ainsi qu'une partie avant inférieure d'une fonderie de custode, des fixations et des articulations d'assise et de dossier de banquette arrière.

Selon une caractéristique de l'invention, l'élément de carrosserie comprend une unique pièce de fonderie comprenant une zone d'alimentation de matière en fusion.

Ainsi, il est possible de réaliser un ensemble de nombreuses pièces de véhicule ayant des fonctions diverses par formage d'une seule pièce de fonderie. Il n'y a donc pas d'étape d'assemblage ou d'étanchéisation, et le nombre d'étapes de production de pièces est limité à une seule. Ainsi le coût de réalisation d'un tel élément de carrosserie est considérablement réduit. Par ailleurs, il n'est pas nécessaire de réaliser des surfaces d'accostage. Il en résulte donc également une réduction de la masse de l'élément de carrosserie. Une telle structure peut par ailleurs être réalisée par un procédé de fonderie sous vide, ce qui améliore encore ses caractéristiques générales et structurelles.

Selon un mode de réalisation, la première face et la deuxième face de l'élément de carrosserie comprennent une pluralité de nervures.

Les nervures situées sur la première face et sur la deuxième face favorisent l'écoulement de la matière en fusion dans le moule de fonderie, et donnent à la pièce une meilleure rigidité. Ces nervures permettent que la custode soit réalisée par formage d'une seule pièce de fonderie.

De plus, la première face peut comprendre un support de réservoir de carburant.

Il est également possible que la première face comprenne un support de traverse de ripage.

En outre, l'élément de carrosserie peut comprendre une zone de fixation d'un longeron tubulaire. Ce longeron tubulaire, prolongement du longeron intégré à l'élément de carrosserie, n'est pas réalisé dans la même pièce de fonderie que l'élément de carrosserie afin d'être facilement réparé ou remplacé en cas de dégradation.

L'élément de carrosserie peut également comprendre une zone de fixation pour un enrouleur de ceinture de sécurité.

Selon un mode de réalisation, l'épaisseur de l'élément de carrosserie est inférieure ou égale à 2 mm. Une telle épaisseur permet de réduire d'avantage le poids de la structure par rapport à un assemblage classique.

Cependant, il est nécessaire de conserver une épaisseur plus importante dans les zones soumises à des contraintes mécaniques plus fortes.

Ainsi, il est possible d'avoir une épaisseur au niveau de la zone de fixation de l'amortisseur de véhicule comprise entre 4,5 mm et 5,5 mm et une épaisseur au niveau de la zone de fixation du palier de train arrière comprise entre 2,5 mm et 3,5 mm.

Préférentiellement, l'élément de carrosserie est réalisé en aluminium ou en alliage d'aluminium.

Selon un autre aspect, il est proposé un procédé de formage d'un élément de carrosserie tel que défini précédemment, dans lequel l'élément de carrosserie est réalisé par fonderie sous pression sous vide.

La fonderie sous pression sous vide permet de réaliser des pièces de fonderie plus fines et donc plus légères que les pièces connues de l'art antérieur.

D'autres avantages et caractéristiques de l'invention apparaîtront à l'examen de la description détaillée de modes de réalisation de l'invention, nullement limitatifs, et des dessins annexés, sur lesquels :
- La figure 1, décrite précédemment, représente un assemblage de pièces formant un élément de carrosserie selon l'art antérieur,
- la figure 2 représente la première face d'un élément de carrosserie de véhicule automobile selon un mode de réalisation de l'invention, et
- la figure 3 représente la deuxième face de l'élément de carrosserie représenté en figure 1.

Dans la suite de la description, les termes concernant la position des différents éléments de l'invention s'entendent par rapport au repère orthogonal usuel des véhicules automobiles, et comprenant
- un axe longitudinal X, horizontal et dirigé de l'arrière vers l'avant du véhicule,
- un axe transversal Y, horizontal, perpendiculaire à l'axe X et dirigé de la droite à la gauche du véhicule qui se déplace vers l'avant,
- un axe Z, orthogonal aux axes X et Y et vertical dirigé de bas en haut.

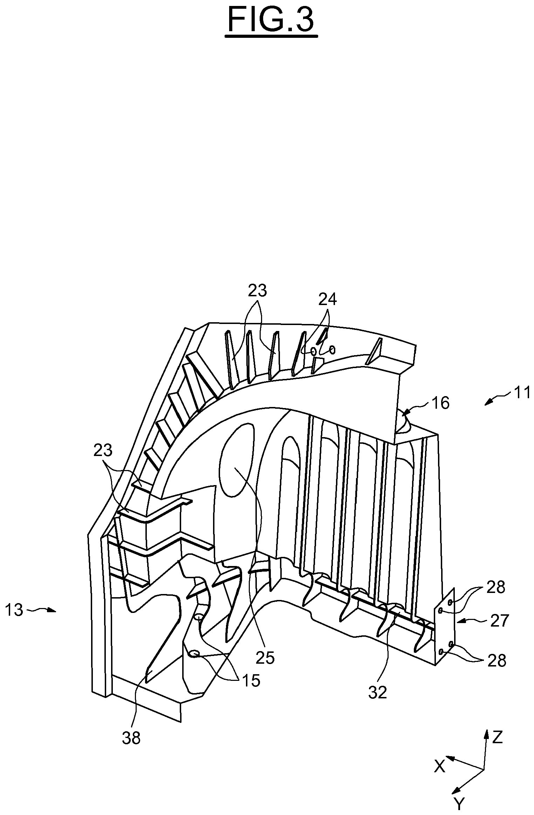

On a représenté sur les figures 2 et 3 un élément de carrosserie 11 de véhicule automobile selon un mode de réalisation de l'invention. Cet élément comprend une unique pièce de fonderie, par exemple en aluminium.

L'élément de carrosserie comprend une première face 12, illustrée par la figure 2 et une deuxième face 13, illustrée par la figure 3, opposée à la première face.

L'élément de carrosserie est destiné à être disposé sur la partie arrière gauche d'un véhicule automobile, de telle manière que la première face 12 soit orientée vers l'intérieur du véhicule, et que la face 13 soit orientée vers l'extérieur du véhicule.

Dans ce mode de réalisation, l'élément de carrosserie 11 est réalisé en aluminium. Cependant, il est tout à fait envisageable de réaliser dans un alliage d'aluminium ou dans d'autres types de matériaux et d'alliages.

Dans ce mode de réalisation, l'élément de carrosserie 11 a une épaisseur moyenne sensiblement égale à 2 mm. On entend ici par épaisseur moyenne la moyenne de la valeur de distance séparant deux points en regard appartenant respectivement à la première face 12 et à la deuxième face 13.

L'élément de carrosserie 11 comprend une zone de fixation 14 sur le palier de train arrière du véhicule. La zone de fixation 14 est représentée sur les figures 2 et 3. Le palier de train arrière est l'organe mécanique assurant la liaison entre l'essieu arrière du véhicule, solidaire des roues arrière du véhicule, et la caisse du véhicule.

La zone de fixation 14 est adaptée pour assurer la liaison avec le palier de train arrière du véhicule. Ainsi, la zone de fixation 14 a une épaisseur plus importante que l'épaisseur moyenne de l'élément de carrosserie. Par exemple, dans ce mode de réalisation, l'épaisseur moyenne au niveau de la zone de fixation 14 sur palier de train arrière est sensiblement égale à 3mm.

La zone de fixation 14 possède également deux bossages 15, permettant la fixation par boulonnage de l'élément de carrosserie 11 avec le palier de train arrière du véhicule.

En référence à la figure 3, la zone de fixation 14 possède également une pluralité de renforts 38 assurant une bonne tenue mécanique de la zone de fixation.

L'élément de carrosserie comprend également une tôle de passage de roue 20 de véhicule. Dans ce mode de réalisation, il s'agit d'une tôle de passage pour roue arrière gauche.

La tôle de passage de roue 20 comprend également une zone de fixation 16 pour l'un des amortisseurs arrière du véhicule, ici l'amortisseur arrière gauche. Les amortisseurs arrière transmettent de nombreuses vibrations et des efforts importants à la caisse du véhicule. La zone de fixation pour amortisseur 16 est donc spécialement adaptée pour supporter des contraintes importantes. Ainsi, elle possède une épaisseur plus importante que l'épaisseur moyenne de l'élément de carrosserie 11. Dans ce mode de réalisation, l'épaisseur moyenne de la zone de fixation 16 de l'amortisseur arrière gauche est de 5 mm.

La zone de fixation 16 pour amortisseur arrière comprend par ailleurs un bossage 17 et un orifice 18. Cette forme spécifique est destinée à la fixation de la tête de l'amortisseur arrière du véhicule.

La tôle de passage de roue arrière comprend également une pluralité de renforts acoustiques 19. Ces renforts 19 servent à limiter les vibrations transmises à la carrosserie du véhicule automobile. Dans ce mode de réalisation, les renforts sont des rainures verticales, et descendent jusqu'au feuillage 21 afin que la matière en fusion soit idéalement répartie lors du formage par fonderie de l'élément de carrosserie.

La tôle de passage de caisse 20 comporte un renfoncement elliptique 25 destiné à laisser passer le tube d'ossature d'un dossier de banquette arrière, afin que celui-ci ne bute pas contre la tôle.

Une tôle de fixation 33 de dossier de siège arrière est présente sur la partie avant basse de la tôle de passage 20.

L'élément de carrosserie 11 comporte en outre une partie basse de custode 22 située au dessus de la tôle de passage de la roue arrière 20. Cette partie basse de custode est destinée à recevoir une partie haute de custode, par exemple par rivets auto-poinçonneurs.

La partie basse de custode 22 comprend sur sa première face 12 et sur sa deuxième face 13 une pluralité de nervures de raidissement 23. Ces nervures 23 servent à assurer une bonne tenue mécanique de la partie basse de custode 22, mais aussi à assurer une bonne répartition de la matière en fusion lors de la fonte de l'élément de carrosserie.

La partie basse de custode comprend en outre deux orifices 24 de fixation d'un enrouleur de ceinture de sécurité.

Un renfort 34 est présent entre la partie basse de custode 22 et la zone de fixation sur le palier de train arrière 14, afin d'améliorer la tenue mécanique de l'ensemble de ces deux pièces.

L'élément de carrosserie 11 comprend également un longeron arrière gauche 26, situé sous la tôle de passage de roue 20 et s'étendant de la zone de fixation 14 jusqu'à l'arrière de l'élément de carrosserie 26.

En référence à la figure 3, le longeron arrière 26 comprend une pluralité de nervures 31 s'étendant transversalement au longeron, du bas du longeron jusqu'en haut de la tôle de passage de roue 20. Une nervure longitudinale 32 s'étend de l'arrière à l'avant du longeron 20. Ces nervures sont destinées à assurer une bonne tenue mécanique de l'élément de carrosserie, et à assurer une bonne répartition de la matière en fusion lors de la fonte de l'élément de carrosserie 11.

La partie arrière du longeron 26 comprend une zone de fixation 27, destinée à recevoir un longeron tubulaire, par exemple en aluminium, qui se fixe par boulonnage sur la zone de fixation, au niveau de quatre bossages 28 comprenant chacun un orifice. Ainsi, en cas de choc léger, il sera possible de remplacer le longeron tubulaire indépendamment du reste de l'élément de carrosserie.

Le longeron arrière comprend en outre un support 29 de réservoir à carburant, ainsi qu'un support de traverse de ripage 30. Le support de traverse de ripage a pour fonction de bloquer la banquette arrière du véhicule lorsqu'on la rabat.

Un élément de structure 35 comprend un orifice 36 destiné à recevoir l'axe d'articulation d'un dossier de siège de banquette arrière.

L'élément de carrosserie comprend une zone d'alimentation de matière en fusion 37.

Lors du formage de l'élément de carrosserie, le métal en fusion circule dans le moule le long des feuillures de l'élément de carrosserie, notamment la feuillure 21, puis dans les nervures 23, 31, 32, afin que la matière en fusion soit idéalement répartie dans l'ensemble du moule.

On peut envisager, sans sortir du cadre de l'invention, un élément de carrosserie présentant les mêmes caractéristiques, en particulier comprenant une zone d'alimentation 37 de matière en fusion, et d'épaisseur inférieure ou supérieure à 2 mm.

Comme indiqué précédemment, un élément de carrosserie conforme à l'invention peut être réalisé par exemple en fonderie d'aluminium sous pression sous vide, dans des installations connues de l'homme de l'art.

Ainsi, grâce aux caractéristiques de cet élément de carrosserie, il est possible de réaliser cet élément de carrosserie par formage d'une seule et même pièce de fonderie.

Les caractéristiques rendant possible la réalisation de l'élément de carrosserie par formage par fonderie sont notamment la zone d'alimentation 37 de matière en fusion et les nervures 23, 31, 32 et 38.

Les nervures 23, 31, 32 et 38 permettent par ailleurs d'améliorer la rigidité et la tenue mécanique de l'élément de carrosserie.

L'étape de mise sous vide de l'intérieur du moule favorise par ailleurs la propagation de la matière en fusion, de telle sorte que l'élément de carrosserie réalisé par fonderie peut présenter une épaisseur moyenne relativement faible par rapport aux pièces de fonderie connues de l'état de la technique.

Un tel élément de carrosserie et son procédé de fabrication permettent également de limiter le nombre d'opérations de formage par emboutissage et de supprimer les opérations d'assemblage par accostage et d'étanchéisation de l'assemblage par dépose de mastic d'étanchéité qui étaient nécessaires à la réalisation d'un assemblage de pièce classique.

L'invention diminue la masse totale du véhicule, et donc améliore les performances de celui-ci, notamment en accélération et en freinage, tout en permettant une moindre consommation en carburant, et de moindres émissions de polluants.

## Revendications

1. Elément de carrosserie (11) pour véhicule automobile, comprenant une première face (12) et une deuxième face (13) opposée à la première face, l'élément (11) comportant une partie de tôle (20) de passage de roue arrière, une zone de fixation (14) pour un palier de train arrière du véhicule, une zone de fixation pour un amortisseur de véhicule (16), une partie de longeron arrière (26), ainsi qu'une partie avant inférieure d'une fonderie de custode (22), des fixations (33) et des articulations (35) d'assise et de dossier de banquette arrière, **caractérisé en ce qu'**il comprend une unique pièce de fonderie comprenant une zone d'alimentation (37) de matière en fusion.

2. Elément de carrosserie selon la revendication 1, dans lequel la première face (12) et la deuxième face (13) comprennent une pluralité de nervures (23, 31, 32, 38).

3. Elément de carrosserie selon l'une des revendications 1 et 2, dans lequel la première face (12) comprend en outre un support (29) de réservoir à carburant.

4. Elément de carrosserie selon l'une quelconque des revendications précédentes, dans lequel la première face (12) comprend un support (30) de traverse de ripage.

5. Elément de carrosserie selon l'une quelconque des revendications précédentes, comprenant une zone de fixation (27) d'un longeron tubulaire.

6. Elément de carrosserie selon l'une quelconque des revendications précédentes, comprenant une zone de fixation (24) d'un enrouleur de ceinture de sécurité.

7. Elément de carrosserie selon l'une quelconque des revendications précédentes, dont l'épaisseur moyenne est inférieure à 2 mm.

8. Elément de carrosserie selon l'une quelconque des revendications précédentes, ayant une épaisseur au niveau de la zone de fixation (16) de l'amortisseur de véhicule comprise entre 4,5 mm et 5,5 mm.

9. Elément de carrosserie selon l'une quelconque des revendications précédentes, dans lequel l'épaisseur au niveau de la zone de fixation (14,15) de palier de train arrière est comprise entre 2,5 mm et 3,5 mm.

10. Elément de carrosserie selon l'une quelconque des revendications précédentes, réalisé en aluminium ou en alliage d'aluminium.

11. Procédé de fonderie d'un élément de carrosserie de véhicule automobile selon l'une des revendications 1 à 10, dans lequel l'élément de carrosserie est réalisé par fonderie sous pression sous vide.

## Patentansprüche

1. Karosserieelement (11) für ein Kraftfahrzeug, welches eine erste Seite (12) und eine der ersten Seite gegenüberliegende zweite Seite (13) umfasst, wobei das Element (11) ein Blechteil (20) des Hinterradkastens, einen Befestigungsbereich (14) für ein Hinterachslager des Fahrzeugs, einen Befestigungsbereich (16) für einen Stoßdämpfer des Fahrzeugs, einen hinteren Längsträgerteil (26) sowie einen vorderen unteren Teil eines den Karosserieteil über dem Hinterrad bildenden Gussteils (22), Befestigungselemente (33) und Gelenke (35) des Sitzteils und der Rückenlehne der Rücksitzbank aufweist, **dadurch gekennzeichnet, dass** es ein einziges Gussteil umfasst, das einen Zuführungsbereich (37) für geschmolzenes Material umfasst.

2. Karosserieelement nach Anspruch 1, wobei die erste Seite (12) und die zweite Seite (13) mehrere Rippen (23, 31, 32, 38) umfassen.

3. Karosserieelement nach einem der Ansprüche 1 und 2, wobei die erste Seite (12) außerdem eine Abstützung (29) für den Kraftstofftank umfasst.

4. Karosserieelement nach einem der vorhergehenden Ansprüche, wobei die erste Seite (12) eine Abstützung (30) für einen Verschiebungsquerträger umfasst.

5. Karosserieelement nach einem der vorhergehenden Ansprüche, welches einen Befestigungsbereich (27) für einen rohrförmigen Längsträger umfasst.

6. Karosserieelement nach einem der vorhergehenden Ansprüche, welches einen Befestigungsbereich (24) für einen Sicherheitsgurtaufroller umfasst.

7. Karosserieelement nach einem der vorhergehenden Ansprüche, dessen mittlere Dicke kleiner als 2 mm ist.

8. Karosserieelement nach einem der vorhergehenden Ansprüche, welches am Befestigungsbereich (16) für den Stoßdämpfer des Fahrzeugs eine Dicke zwischen 4,5 mm und 5,5 mm aufweist.

9. Karosserieelement nach einem der vorhergehenden Ansprüche, wobei die Dicke am Befestigungsbereich (14, 15) für das Hinterachslager zwischen 2,5 mm und 3,5 mm beträgt.

10. Karosserieelement nach einem der vorhergehenden Ansprüche, welches aus Aluminium oder aus Aluminiumlegierung hergestellt ist.

11. Verfahren zum Gießen eines Karosserieelements eines Kraftfahrzeugs nach einem der Ansprüche 1 bis 10, wobei das Karosserieelement durch Vakuumdruckguss hergestellt wird.

## Claims

1. Motor vehicle body element (11) comprising a first face (12) and a second face (13) opposite to the first face, the element (11) comprising a rear wheelhouse sheet part (20), an attachment region (14) for a rear axial bearing of the vehicle, an attachment region (16) for a vehicle shock absorber, a rear side rail part (26), and also a lower front part of a cast rear quarter panel (22), attachments (33) and articulations (35) for a seat part and backrest of a rear bench seat, **characterized in that** it comprises a single casting comprising a molten material feed region (37).

2. Body element according to Claim 1, in which the first face (12) and the second face (13) comprise a plurality of ribs (23, 31, 32, 38).

3. Body element according to either of Claims 1 and 2, in which the first face (12) additionally comprises a fuel tank support (29).

4. Body element according to any one of the preceding claims, in which the first face (12) comprises a shifting-crossmember support (30).

5. Body element according to any one of the preceding claims, comprising a region (27) for attaching a tubular side rail.

6. Body element according to any one of the preceding claims, comprising a region (24) for attaching a safety belt winder.

7. Body element according to any one of the preceding claims, of which the average thickness is less than 2 mm.

8. Body element according to any one of the preceding claims, having a thickness at the attachment region (16) for the vehicle shock absorber of between 4.5 mm and 5.5 mm.

9. Body element according to any one of the preceding claims, in which the thickness at the rear axial bearing attachment region (14, 15) is between 2.5 mm and 3.5 mm.

10. Body element according to any one of the preceding claims, which is made of aluminium or an aluminium alloy.

11. Method for casting a motor vehicle body element according to one of Claims 1 to 10, in which the body element is produced by vacuum diecasting.
